# EUROPEAN PATENT SPECIFICATION

(11) **EP 1 413 210 B1**
(45) Date of publication and mention of the grant of the patent: **15.06.2011**
(21) Application number: 02745816.5
(22) Date of filing: 03.07.2002
(51) Int. Cl.: A23L 2/00, A23L 1/39, A23F 3/00, A23F 5/00, A23C 3/00, A23C 9/144, A23L 2/50, A23F 5/24

(54) **A method of treatment of a liquid food using an electric current**
Verfahren zur Behandlung eines flüssigen Nahrungsmittels mit einem elektrischen Strom
Procédé de traiter des aliments liquides avec un courant électrique

(30) Priority: 05.07.2001 JP 2001205250; 05.07.2001 JP 2001205369; 28.09.2001 JP 2001301152
(43) Date of publication of application: 28.04.2004
(73) Proprietor: POKKA CORPORATION, Nagoya-shi Aichi 460-8415 (JP)
(72) Inventor: INOUE, Takashi, Tokoname-shi, Aichi 479-0062 (JP); KATO, Wakako, Komaki-shi, Aichi 485-0029 (JP); YAMAGUCHI, Kenji, Nishikasugai-gun, Aichi 481-0006 (JP)
(74) Representative: Campbell, Arlene
(86) International application number: PCT/JP2002/006728
(87) International publication number: WO 2003/003859

(56) References cited:
- BE-A- 404 339
- CH-A- 97 862
- CH-A- 623 994
- FR-A- 438 062
- FR-A- 658 383
- FR-A- 2 761 234
- GB-A- 433 576
- GB-A- 595 711
- GB-A- 631 658
- JP-A- 7 087 938
- JP-A- 9 001 153
- JP-A- 11 216 470
- JP-A- 2001 078 670
- JP-A- 2001 178 368
- JP-A- 2001 275 569
- US-A- 4 347 714

## Description

### Field to which the Invention Belongs

The present invention relates to various liquid foods including drinks and processes for producing the same. More specifically, the invention is characterized in that materials of liquid foods are subjected to current passage treatment, (i.e., electric current-applying treatment) although electrolysis treatment is also described. The resulting liquid foods retain taste and quality over a long period of time, and further liquid foods having an antioxidation ability (i.e., antioxidation activity or radical-scavenging activity) are also improved in antioxidation ability and available as foods good for health.

### Prior Art

Drinks such as coffee, black tea and juice are usually good in taste and quality immediately after brewing, immediately after extraction or immediately after squeeze. However, it is unavoidable that the taste and the quality of products are deteriorated with time due to oxidation, change in temperature or the like. Especially, drinks filled in sealed containers, unlike coffee which is drunk just after brewed and extracted from coffee beans in coffee houses or at home, unavoidably take a certain period of time from production to drinking by consumers.

Not only coffee but also milk coffee (milk-containing coffee), milk tea (milk-containing tea) and other milk composition-containing drinks tend to be decreased in stability owing to factors such as pH, oxygen and heat to cause the deterioration of quality. In particular, when these drinks are filled in containers, the drinks filled in sealed containers are decreased in stability even at normal temperatures during the very period to deteriorate the quality thereof. Needless to say, in hot vending, can warmers and vending machines, drinks are stored at high temperatures over a long period of time. Accordingly, the decrease in stability and the deterioration of taste and quality are more accelerated.

Thus, for controlling or preventing the decrease in stability and for controlling or preventing the decrease in flavor and quality, the use of additives and the use of enzymes have been studied, and a part of these have been put to practical use. With respect to coffee, the use of various deterioration preventing agents has been studied. However, satisfactory products have not been actually developed as yet.

Meanwhile, with respect to milk composition-containing drinks, the use of additives can indeed stabilize milk to some extent, but it does not necessarily lead to stabilization because of the difference in conditions of drinks to which milk is added. Further, the use of additives tends to influence taste and flavor. Still further, since there is a recent tendency that the use of many additives or the use of additives in large quantities is not demanded, it has been required to find a method in which the use of additives is controlled.

In recent years, with respect to liquid foods, foods typified by coffee, black tea and the like as described above, in which palatability is important, have been produced, and further various health foods have been produced and sold for maintenance or promotion of health. Thus, liquid foods tend to shift more to those having high effects. In addition, active oxygen and free radicals have attracted much interest because of causes to induce cancers, life style-related diseases, skin disorders and various diseases. In order to suppress the in-vivo increase in active oxygen and free radicals, foods having an antioxidation ability have been highlighted, and the functions thereof have been actively studied. Moreover, it has been expected that foods to be eaten themselves have a high antioxidation activity.

A number of prior art documents relating to this field are in existence and include FR2761234 which describes a process in which the caffeine in coffee or tea is degraded by electrolysis of the brewed liquid. The process is carried out in an adapted domestic filter coffee maker with a degradation unit positioned beneath the filter outlet.

CH623994 also describes a method of removing caffeine in which an acidic aqueous caffeine-containing solution is passed between two cation-permeable membranes of a cell of an electrolytic unit. A first flushing solution is then passed by the membrane assigned to the positive electrode in order to maintain the pH in the solutions required to maintain electrode dialysis, and a second flushing solution is passed by the membrane facing the negative electrode in order to conduct away the caffeine which has migrated through the membrane. As a result of the combination of the membranes, the positive caffeine ions can leave the solution to be treated and the negative chlorogenic acid ions are retained.

Whereas GB631658 describes an improved method and apparatus for sterilising and/or de-acidifying liquid foods and in particular in the case of alimentary liquids, for example, fruit juices and milk, the method comprises the liquid being passed into a container where its speed is reduced before it overflows in the form of a thin sheet, and thereafter is electrolyzed as it passes in a thin layer between electrodes. In one embodiment the liquid enters a container through an opening and overflows into an annular vat, in which is immersed a ring-shaped electrode. This electrode is made of aluminium if the liquid is to be de-acidified, and is made of aluminium and silver if the liquid is to be de-acidified and sterilized. The container is connected in an electric circuit as cathode and the electrode as anode.

Similarly, GB433576 describes an apparatus for eliminating acid from milk, cream, butter, whey and the like by upward passage through compartments formed by end electrodes of a cell and a series of vertical plates serving as intermediate bi-polar electrodes. A common space is provided at the bottom of the vessel for distribution of the liquid. The cell wall is of insulating material and the electrodes are generally of platinum, aluminium, or carbon. The apparatus can also be modified such that the middle plate is connected to one pole and the end plates to the opposite pole.

Other documents describe the preservation or sterilisation of liquids such as GB595711 which describes a process of preserving fresh citrus fruit juice wherein upon extraction from the fruit, the citrus fruit juice is preserved by subjecting the juice to sub-atmospheric pressure, heating and agitating, and, while passing an electric current therethrough, subjecting the juice to the action of an oxide of silver, platinum or nickel. Orange juice freshly extracted and freed from pulp is subjected to reduced pressure in a series of tanks and from the latter is transferred to a horizontally disposed rotatable drum in which is established a vacuum slightly higher than that in the tank. The drum is rotated and, during rotation, an electric current passes through the juice at each completion of the circuit between the electrodes diametrically opposed along the length of the drum, each electrode consisting of a perforated tube of silver or the like containing a fabric bag filled with the oxide. The juice is pasteurized during rotation of the drum by heat from burners.

Likewise, CH97862 also describes a method of preserving liquids but this time by applying an electrical force field, which is induced by alternate current or by irradiating the liquid with X-ray. The electrical field is described as having a microbicidal or microbistatic effect and as being able to inactivate microbial spores. In order to optimise the latter effects, additives, which alter the electrical conductivity of the liquid, can be used.

Similarly BE404339 describes a method for sterilizing liquids, such as milk, by means of charge of metallic electrodes (such as silver) having a catalytic and oligodynamic effect. As a result of such a method, metallic ions are released into the liquid in which the electrodes are located and as a consequence the liquid is sterilized. Such is due to the fact that microorganisms absorb the metallic ions and then die due to the poison effect of those ions. More specifically, the microorganisms would be deprived of oxygen by the deposit of the metal, and would also suffer of a change in polarization (which would induce a lethal short circuit inside the cell). Further, the liquid to be sterilized is diffused in thin layers between the electrodes, of which at least one exerts, by its movement (for example a rotating movement) an agitating effect on the liquid which goes in front of it.

As does FR658383 which describes a method for preserving the liquid foods (such as milk and similar foods) and for killing microbes which are contained therein, characterized in that the foods are beforehand cleared of gas and thus remain in liquid form. They are then warmed at a temperature which is not sufficiently high to obtain an alteration affecting the taste, the nutritive value, and the natural features of said foods (content in vitamins), and in that one makes the foods flow in a thin layer into the vacuum by submitting them to the peak effect, in order to activate ions in low-voltage conditions.

FR438062 also describes a method for preparing food or medicinal substances in solutions, said solutions being intended to be absorbed by the human body, this method being characterized in that the edible liquid (being for example some milk mixed with alkaline solutions) is, before its use, treated for a certain time by means of an electric current going through the solution between two or a plurality of electrodes, the tension, the intensity and the number of periods of this electric current being selected in such a way that there is neither harmful ionization, nor issues resulting from the reaction corresponding to said ionization.

### Problems that the Invention is to Solve

The invention has been made to meet the foregoing needs of those skilled in the art. In view of physical properties and organoleptic properties, it has been made to prevent the decrease in the stability, the taste and the quality of coffee, milk components-containing drinks and other various liquid foods and to maintain or improve the stability, the taste and the quality thereof.

Moreover, the invention has been made to newly develop technology of efficiently producing foods having an improved antioxidation ability without using additives in view of the importance of foods having a high antioxidation ability, namely, a high radical-scavenging activity and further in view of consumers' needs for safety and for health.

### Means for Solving the Problems

In order to attain the foregoing objects, the present inventors have conducted investigations from various aspects. Consequently, they have conducted extensive studies upon focusing on a system of stabilization and prevention of quality deterioration or a system of long-term storage without the use of additives in view of consumers' recent needs that they do not desire the use of chemical additives such as quality deterioration preventing agents.

They have electrolyzed a coffee extract (so-called regular coffee ; this means coffee brewed from coffee beans , and have then found that the decomposition, the denaturation and the like of coffee extracted components are improved and the quality can be retained for a long period of time. Further, regarding a mixed liquid obtained by adding various side materials to coffee, other than coffee, the long-term retention of quality by an electrolysis treatment has been confirmed. The investigations have been further continued, and a current passage treatment has been performed instead of an electrolysis treatment. Then, an excellent long-term retention of quality has been likewise confirmed.

They have applied a current passage treatment to milk, and have then found that stability is maintained without quality deterioration such as agglomeration or formation of precipitate and no special organoleptic change occurs in qualities of taste, flavor and the like, so that long-term stabilization and storage are possible. They have further conducted a current passage treatment of a mixed liquid obtained by adding milk to coffee (coffee milk), and have then found that excellent effects of maintaining stability, flavor and quality have been likewise brought forth. Investigations have been further continued, and an electrolysis treatment other than a current passage treatment is also described.

During these studies, the present inventors have broadened the range of studies, and have electrolyzed liquid foods having an antioxidation ability which foods are known as health components. Consequently, they have found for the first time that an antioxidation ability is improved, that when a component having an antioxidation ability is contained even in a small amount, the effect of improving the antioxidation ability is provided, and that these effects are likewise provided by a current passage treatment. As a result of further investigations based on these useful new findings, the invention has been finally completed.

The invention is described in detail below with respect to a current passage treatment. However electrolysis treatment or indeed both such treatments can be used.

In practicing the invention, a main material of a desired liquid food and/or a mixed liquid prepared by adding a side material(s) to the main material is subjected to a current passage treatment. A current passage treatment may be conducted in one position of steps from a material to a final liquid food product through a mixed liquid or not therethrough, the treatment may be conducted in two or more positions thereof, and a current passage treatment may be conducted by the respective same treatments or a combination of different treatments. Further, components for preparing the main material and the side materials may be previously subjected to a current passage treatment as required.

In the invention, the foods include drinks also. Thus, the liquid foods are sometimes called drinks.

First of all, for producing coffee drinks according to the invention, it is necessary to prepare a liquid containing extracted components of coffee. This liquid includes all of coffee, namely, an extracted liquid obtained by brewing and extracting roasted coffee beans by various methods and all of liquids containing components extracted from coffee. For example, it includes all of extracts obtained by varying extraction conditions such as an extraction temperature, concentrated liquids thereof, dilute liquids thereof, component fraction liquids obtained by fractionating a specific fraction(s) therefrom, component fraction liquids obtained by removing specific fraction(s)- through fractionation, such as a decaffeinated coffee, and a solution of instant coffee (i.e., dried coffee extract), etc.; namely it includes all of liquids prepared by using water or hot water (0 to 200°C), containing components extracted from coffee.

In extracting coffee, a blending ratio or a roasting degree of coffee beans is not particularly limited, and may be properly determined in a usual manner. An extraction method is not particularly limited either. An extracted liquid or an extract obtained through a drip method, a box method, a continuous multi-column method, a kneader method or the like can be used. An extraction temperature is not particularly limited either. Further, an extracted liquid, an extract, a concentrated liquid, a dilute liquid, a solution of instant coffee and the like may be subjected, as required, to fractionation such as chromatography to obtain a specific fraction(s) or remove a specific fraction(s).

The mixed liquid in the invention may be prepared by adding a side material(s) to a liquid containing the foregoing coffee extracted components and adjusting the product volume. The side material may include all of side materials including milk composition. Examples thereof include pH adjustors such as sodium bicarbonate; vitamin C, vitamin E; emulsifying agents such as sucrose fatty acid ester, glycerin fatty acid ester, sorbitan fatty acid ester and soybean phospholipid; oxidation inhibitors; antioxidants; saccharides such as glucose, fructose, maltose, sucrose, trehalose, raffinose and starch; sugar alcohols such as erythritol and maltitol, sweeteners; flavors; enzymes; and the like. One or more thereof are selectively used.

According to the present invention the thus-obtained liquid containing the coffee extracted components and/or its mixed liquid is then subjected to a current passage treatment. In the alternative, use of an electrolysis treatment is described in which the

device used in conducting the electrolysis treatment is not particularly limited so long as it is a device used for decomposing water or the like. For example, a two-cell system in which two cells are partitioned via a diaphragm or a three-pole system in which a DC voltage is switched over by a flip-flop circuit can be used without problem. The two-cell system includes a type in which electrolysis is conducted for a certain period of time and a running water type. Examples of the diaphragm include an ion exchange membrane and a neutral diaphragm such as a cellulose membrane.

In the electrolysis method described using the ion exchange membrane or the neutral membrane, a liquid containing coffee extracted components and/or its mixed liquid with the same composition as that on the cathode side (region), or water containing minerals may be passed through the anode side (region). As the water containing minerals, a ground water, a city water, and a water prepared by adding various minerals properly to a pure water may be used. Examples of the minerals can include sodium, potassium, magnesium, calcium and iron, and further these minerals may be used in combination.

According to the present invention the current passage treatment can be conducted by removing the diaphragm at the time of the treatment.

With respect to the electrodes, for example, a ferrite electrode, a platinum-plated titanium electrode, a titanium platinum calcination electrode and the like can be used as an anode, and a stainless steel electrode, a platinum-plated titanium electrode, a titanium platinum calcination electrode and the like can be used as a cathode.

Electrolysis may be conducted by passing a DC current in a state where a liquid such as a liquid containing extracted components is continuously passed and/or stays between two electrode sides. The quantity of current is at least 0.1 A, but generally from 1 to 50 A. The quantity of the current is properly determined depending on factors such as conductivity, distance between the electrodes and density. For example, in the case of a liquid flow rate of 4 L/min, the quantity of the current is from 0.5 to 20 A, from 1.0 to 10 A, or from 1.5 to 7 A. In other cases, it may be determined on the basis of this quantity of the current.

According to the present invention the current passage treatment can be conducted by removing the diaphragm in the foregoing case. The quantity of the current passing through the liquid is the same as in the foregoing case. The time for current passage is likewise from 0.001 second to 5 minutes, preferably from 0.005 seconds to 2 minutes. These numerical ranges are tentative standards, and the conditions might be sometimes deviated from the foregoing ranges.

According to a further aspect of the present invention the current passage treatment may be applied to
(1) a liquid containing coffee extracted components and/or
(2) a mixed liquid containing a side material(s) either before or after adjusting the product volume.

The current passage treatment of the present invention may be applied to (1) or (2), or to both of them. The number and the combination of these treatments are not particularly limited.

In the invention, extraction water used for extraction of coffee and other various waters to be used as materials are not subjected to the current passage treatment, but the invention is characterized in that an extracted components-containing liquid such as a coffee extracted liquid obtained by extracting coffee with extraction water is subjected to the current passage treatment. Current passage of the extracted components-containing liquid is preferable to the current passage of the waters because the current passage of the extracted liquid or the mixed liquid more influences the components than the current passage of the waters, making it possible to maintain the effects for a long period of time.

The invention may be also practiced in a deoxidated condition, and the deterioration of components is not caused by virtue of deoxidation. That is, when an oxidative deterioration is more prevented by deoxidation, the change of components less occurs, a quality deterioration can be suppressed, and this is quite effective for maintaining coffee good in taste and flavor over a long period of time.

The practice in the deoxidated condition includes each treatment in an inactive gas atmosphere, blowing of an inactive gas through a material(s), an intermediate product and a final product, replacement of inside oxygen with an inactive gas and degassing. Further, in the case of filling the liquid in a container, it includes replacement of air in a filling container with an inactive gas, replacement of air in a head space with an inactive gas and degassing (removing air of head space). At least one of these treatments for removing oxygen can be exemplified.

The thus-obtained liquid is filled in containers such as cans, bottles, papers, PET bottles and soft packaging containers, and sealed, and then pasteurized as required to provide drinks filled in sealed containers.

When the liquid is filled in containers to withstand retorting (heat pasteurization under pressure), it is filled in containers, sealed, and then pasteurized in a retort.

With respect to drinks whose flavor is heavily changed due to heat of pasteurization in a retort or the like or drinks incapable of pasteurization in a retort, a charging liquid is subjected to UHT pasteurization or other flash heat pasteurizations, then filled in containers, and sealed.

When freeze-storage is employed or long-term storage is not needed after production of drinks, the liquids may be filled in containers without pasteurization.

The above-obtained drinks filled in sealed containers may be stored at room temperature or by being refrigerated, heated or frozen as required.

With respect to the coffee drinks made according to the invention, some non-limitative embodiments are described below.
(Embodiment 1) A process for producing a drink, characterised by subjecting a liquid containing a coffee extracted components and/or a mixed liquid thereof to current passage treatment.
(Embodiment 2) The process recited in embodiment 1 characterised in that the liquid containing the coffee extracted components is at least one selected from an extracted liquid, an extract, a concentrated liquid, a dilute liquid, a component fraction liquid and a solution of instant coffee.
(Embodiment 3) The process recited in embodiments 1 or 2, characterized in that the process is performed in a deoxidated condition.
(Embodiment 4) A drink retaining flavor and quality over a long period of time even at high temperatures, which is produced by the process according to any one of embodiments 1, 2 or 3.
(Embodiment 5) The drink recited in embodiment 4, characterized in that the retention of the flavor and the quality is at least one of suppression of decrease in chlorogenic acid and suppression of formation of organic acids.

Production of milk-containing drinks is described below.

In one of the embodiments when producing milk-containing drinks according to the invention, a milk composition can be subjected to the current passage treatment.

As the milk composition, at least one of raw milk (cow's milk), processed milk, skim milk powder, whole milk powder, skim milk and concentrated milk is mentioned. A liquid containing the same, a liquid obtained by dissolving powder (i.e., skin milk powder or whole milk powder) in water or hot water, each concentrated liquids or each dilute solutions of these liquids, and the like are also included in the milk composition. Further, an emulsifying agent, a stabilizer such as cellulose or sodium caseinate, and the like may be added to the milk composition.

The milk composition is subjected to the current passage treatment to obtain a reduced milk material. By the treatment, the raw milk feel of the milk composition is improved, the taste is enriched, and stabilization is also attained.

The current passage treatment of the milk composition is performed in the same manner as in the foregoing coffee drinks. Incidentally, treatment is not only applied to the milk composition but also conducted in each step of the invention.

The milk composition is treated by current passage. One and the same treatment may be repeated at least twice, as required, as described previously, or a combination of the different treatments may be conducted plural times. In electrolysis treatment, protein is adhered to an ion exchange membrane or a neutral membrane to heavily deteriorate the membrane itself. For this reason, it is usually efficient to perform the current passage treatment.

The milk composition is treated in this manner to obtain the milk material. A drink is produced by an ordinary method which comprises adding the milk material to an extracted liquid of coffee, black tea, green tea or Chinese tea or a liquid containing the extracted liquid, and mixing them. The resulting product is a milk-containing drink having a good milk stability. That is, milk is stabilized during the production to provide a product having an excellent quality with an improved stability over time in long-term storage. Further, the drink can be produced in which a rich taste is enhanced, a raw milk feel tends to remain and the taste and the flavor of milk are improved.

A drink can also be produced by subjecting a mixed liquid containing the milk composition to the current passage treatment. The milk composition added at this time may be one subjected to the current passage treatment (for example, the foregoing milk material) or one not subjected thereto. For making good the stability of a milk of final drink, it is preferable that the drink is produced by adding the milk composition subjected to the current passage treatment.

In the invention, the mixed liquid is prepared by adding, besides the milk composition, a side material(s) to a main material of a desired drink, such as a coffee liquid, a tea liquid, juice or the like, and adjusting the product volume. As the side material (s), for example, one or more side materials used to produce coffee drinks as recited in the claims are used.

The mixed liquid is then subjected to the current passage treatment, and desired steps such as filling in containers and pasteurization are conducted as required to produce desired drinks. In the invention, the milk composition is previously subjected to the the current passage (for example, the foregoing milk material), or the mixed liquid containing the milk composition (which may be previously subjected to the current passage) is previously subjected to the current passage. Desired drinks can also be produced effectively by using them as required.

The milk-containing drinks to which the invention can be applied may be all drinks to which the milk composition is added. Examples thereof include a milk-containing coffee, a

milk-containing tea drink, a milk-containing juice,milk shake, milk-containing cocoa , an acidic milk drink and soup. Especially, coffee drinks or tea drinks are preferable.

The invention may also be practiced in a deoxidated condition, and the deterioration of components is not caused by virtue of deoxidation. That is, when an oxidative deterioration is more prevented by deoxidation, components are less changed, and the deterioration of quality can be suppressed. It is quite effective for maintaining the milk-containing drinks good in taste and flavor over a long period of time.

The thus-obtained liquids are filled in containers and sealed in a usual manner, and, as required, pasteurized to provide drinks filled in sealed containers. The practice in the deoxidated condition and the production of the drinks filled in containers may be conducted in the same manner as in the foregoing coffee drinks.

Although the drinks according to the invention contain the milk composition, occurrence of scale, agglomeration and precipitation of milk components, flotation of milk fat, and the like are suppressed or prevented to stabilize milk, and the appearance is also excellent without observing the deterioration of quality. Further, with respect to organoleptic properties, taste, flavor and quality are excellent without being deteriorated. These effects have been also observed when the drinks have been preserved for a long period of time. In view of both the physical properties and the organoleptic properties, it has been observed that even when the drinks have been stored in a severe atmosphere over a long period of time, the improved property, the stability, the taste, the flavor and the quality of the milk composition are satisfactorily maintained or the deterioration is prevented or suppressed.

With respect to the milk-containing drinks according to the invention, some non-limitative embodiments are described below.
(Embodiment 1) A milk material obtained by subjecting a milk composition to current passage treatment.
(Embodiment 2) A milk-containing drink produced using the milk material recited in embodiment 1.
(Embodiment 3) A milk-containing drink obtained by subjecting a mixed liquid containing a milk composition to current passage treatment.
(Embodiment 4) A milk-containing drink obtained by subjecting a mixed liquid produced by using the milk material recited in embodiment 1 to current passage treatment.
(Embodiment 5) The milk-containing drink according to any one of embodiments 2 to 4, characterized in that the resulting milk-containing drink is a milk-containing coffee drink, a milk-containing tea drink or a milk-containing fruit juice drink.
(Embodiment 6) The milk-containing drink according to embodiment 5, characterized in that the milk-containing drink recited in embodiment 5 is a drink having an excellent stability with quality deterioration prevented.
(Embodiment 7) A process for producing a milk-containing drink by subjecting a milk composition to current passage treatment as required and then preparing or not preparing a mixed liquid containing the milk composition, characterized by comprising at least one of the following:

A: when the milk composition is subjected to the current passage treatment,
   (1) directly producing the milk-containing drink using the thus-treated milk composition;
   (2) preparing the mixed liquid containing the thus-treated milk composition, and producing the milk-containing drink using the same;
   (3) preparing the mixed liquid containing the thus-treated milk composition, further subjecting this to the current passage treatment, and then producing the milk-containing drink using the same; and
B: when the milk composition is not subjected to the current passage treatment,
   (4) preparing the mixed liquid containing the milk composition, subjecting this to the current passage treatment, and then producing the milk-containing drink using the same.

As stated above, the present inventors have found for the first time that the current passage treatment of a liquid food according to the claims gives many prominent effects such as the retention of the taste and the quality of foods and prevention of scales of milk components. As a result of further studies, it has been found for the first time that the prominent effect, different from the foregoing, that these treatments improve the antioxidation ability of foods, is brought forth.

The invention in which the current passage treatment improves the antioxidation ability of foods has been hitherto unknown and quite unique. Since the resulting foods are useful for suppressing active oxygen and free radicals in vivo, they are said to be foods good for health. Accordingly, the method of invention also provides such foods good for health.

In the.invention, a food material according to the claims with an antioxidation ability which is known as a health composition and/or the mixed liquid prepared using it is subjected to the current passage treatment. The component having an antioxidation ability may also include the following. In the invention, drinks are also included in the food.

The following component having an antioxidation ability, though they are not limited: vitamins such as vitamin A, vitamin C, vitamin E, carotenoid and lycopene; flavonoids such as isoflavon and eriocitrin (lemon flavonoid); polyphenols such as chlorogenic acid, catechin and anthocyanin; and any other components having a function of scavenging free radicals or eliminating active oxygen. It is preferable to use a component derived from a natural material.

The food material comprising the component(s) having an antioxidation ability may comprise at least one of the foregoing components having an antioxidation ability, and may include, in addition to the food material such as coffee, tea, cacao, fruit juice and vegetable juice, a purified product of the foregoing component or a food additive comprising one or more of the foregoing components. The food material in a liquid form is used as such, while a powder form, a solid form or the like is used by being dissolved in water.

In the invention, the mixed liquid is prepared by adding a side material (s), as required, to at least one selected from the food material as disclosed in the claims itself, an extracted liquid of the food material (coffee, black tea, Chinese tea, green tea or the like) and an extract thereof, and adjusting the product volume. Examples of the side material may include a milk composition selected from raw milk, skim milk, milk powder, skim milk powder, concentrated milk and other various milk-derived compositions; pH adjustors such as sodium bicarbonate; vitamin c, vitamin E; emulsifying agents such as sucrose fatty acid ester, glycerin-fatty acid ester, sorbitan fatty acid ester and soybean phospholipid; oxidation inhibitors; antioxidants; saccharides such as glucose, fructose, maltose, sucrose, trehalose, raffinose and starch; sugar alcohols such as erythritol and maltose; sweeteners; flavors; enzymes; stabilizers; and the like.

Products prepared by adding flavors, sugars, sugar alcohols, other saccharides, sweeteners, sour seasonings and other additives to a fruit juice, a fruit paste and the like are also included in the mixed liquid. Products further containing at least one of the foregoing components having an antioxidation ability are also included in the mixed liquid.

The thus-prepared mixed liquid and/or the food material is then subjected to the current passage treatment. These treatments may be conducted in the same manner as in the foregoing coffee drinks or the milk-containing drinks.

The foregoing food material is subjected to the current passage treatment to provide the food material having an improved antioxidation ability. The thus-obtained material can be sealed and preserved, or a food may be produced using said food material having the improved antioxidation ability without carrying out additionally the current passage treatment).

It is also possible that one of the following (1) to (3) is used,
(1) a food material containing at least one of components having an antioxidation ability as such,
(2) a food material containing at least one of components having an antioxidation ability, which material is subjected to the current passage treatment, and
(3) a food material having no antioxidation ability, which material is subjected to the current passage treatment,
   and is mixed with other material(s) to prepare a mixed liquid which is then subjected to the current passage treatment.

(Incidentally, a process in which a mixed liquid prepared using only a food material having no antioxidation ability is subjected to the current passage treatment is not included in the method of the invention carried out to the mixed liquid prepared by using one of the above-shown (1) to (3).)

Possible examples of application foods are as follows. With respect to application examples, in addition to coffee and fruit juice, application to overall drinks including tea drinks, soups, milk drinks, sports drinks containing various effective components, health drinks and the like is possible. Further, in the case of coffee, tea drinks and fruit juice drinks, a liquid obtained by extraction or squeezing may be subjected to the current passage treatment, and then concentrated or dried. The thus-obtained foods can be preserved while keeping the improved antioxidation ability, by being filled in containers and sealed.

The invention may also be practiced in a deoxidated condition, and the deterioration of components is not caused by virtue of deoxidation. That is, when an oxidative deterioration is more prevented by deoxidation, components are less changed, and the deterioration of quality can be suppressed. It is quite effective for maintaining the health foods good in taste and flavor over a long period of time.

The thus-obtained foods good for health are filled in containers and sealed in a usual manner, and, as required, pasteurized to provide drinks filled in sealed containers. The practice in the deoxidated condition and the production of the drinks filled in containers may be conducted in the same manner as in the foregoing coffee drinks or milk-containing drinks.

With respect to the foods good for health , non-limitative embodiments are described below.
(Embodiment 1) A process for producing a food material having an improved antioxidation ability (radical-scavenging activity), characterized by subjecting a food material containing at least one component having an antioxidation ability (radical-scavenging activity) to a current passage treatment.
(Embodiment 2) A process for producing a food, characterized by preparing the food material according to embodiment 1, and producing the food using the same.
(Embodiment 3) A process for producing a food having an improved antioxidation ability (radical-scavenging activity), characterized by preparing a mixed liquid using a food material containing at least one component having an antioxidation ability (radical-scavenging activity), and subjecting the resulting mixed liquid to a current passage treatment.
(Embodiment 4) A process for producing a food having an improved antioxidation ability (radical-scavenging activity), characterized by preparing a mixed liquid using a food material obtained by subjecting a food material containing at least one component having an antioxidation ability (radical-scavenging activity) to a current passage treatment, and subjecting the resulting mixed liquid to a (the) current passage treatment.
(Embodiment 5) A food material or food having an improved antioxidation ability (radical-scavenging activity), which is produced by the process according to any one of embodiments 1 to 4.
(Embodiment 6) A method for improving an antioxidation ability (radical-scavenging activity) of a food material or food, characterized in that current passage treatment is conducted thereto.

The invention is illustrated specifically below by referring to Examples A3, A4, B1, B5 and C4.

### (A) Coffee drinks .

### Example A1 (Reference Example)

10 kg of coffee beans was extracted with 100 L of hot water to obtain a coffee extracted liquid (so-called regular coffee; coffee solid content Brix 3.0). Subsequently, this coffee extracted liquid was passed through an electrolytic device of ARV Company at a rate of 4 liters per minute, while a DC current of 5 A was passed therethrough, wherein the anode and the cathode were partitioned with an ion exchange membrane, and the coffee extracted liquid was passed through both the electrode sides, and the liquid of the cathode side was collected. Sodium bicarbonate was added thereto at an amount ratio of 0.3 g/L of the liquid and mixed therewith. The resulting mixed liquid was filled in cans, and pasteurized in a retort (F₀ = 4 or more) to obtain a coffee drink.

### Example A2 (Reference Example)

10 kg of coffee beans was extracted with 100 L of hot water. To the thus-obtained coffee extracted liquid (coffee solid content Brix 3.0), was added sodium bicarbonate at an amount ratio of 0.3 g/L of the liquid, and they were mixed. The resulting mixed liquid was passed through an electrolytic device of ARV Company at a flow rate of 4 liters per minute, while a DC current of 5 A was passed therethrough, wherein the anode and the cathode were partitioned with an ion exchange membrane, and the mixed liquid was passed through both the electrode sides. The liquid of the cathode side was then collected, filled in cans, and pasteurized in a retort (F₀ = 4 or more) to obtain a coffee drink.

### Example A3

10 kg of coffee beans was extracted with 100 L of hot water. To the thus-obtained coffee extracted liquid (coffee solid content Brix 3.0), was added sodium bicarbonate at an amount ratio of 0.3 g/L of the liquid, and they were mixed. The resulting mixed liquid was held in a tank, and a DC current of 5 A was passed therethrough for 5 seconds by inserting electrodes without a diaphragm. After the current passage, the mixed liquid was filled in cans, and pasteurized in a retort to obtain a coffee drink.

### Example A4

Electrodes were installed in a pipe, and the mixed liquid of the coffee extracted liquid and sodium bicarbonate obtained in the foregoing Example was passed through the pipe to conduct the current passage treatment (with no diaphragm) of the mixed liquid under the following conditions. Incidentally, the current passage time was controlled by changing the flow rate in the pipe.
current: 10 A
current passage time: Current passage treatment was conducted for 1 second.

### (Comparative Example A)

Sodium bicarbonate was added, at an amount ratio of 0.3 g/L of the following coffee extracted liquid, to a coffee extracted liquid (coffee solid content Brix 3.0) obtained by extracting 10 kg of coffee beans with 100 L of hot water, and they were mixed. The resulting mixed liquid was filled in cans, and pasteurized in a retort (F₀ = 4 or more) to obtain a coffee drink.

### (Test results: Evaluation 1)

The drinks obtained in Example A1 and Comparative Example A were drunk by 15 coffee expert panelists including 5 coffee expert testers. Consequently, it was found that the coffee drink obtained in Example A1 was strong in flavor and coffee feel and good in quality as compared with the coffee drink obtained in Comparative Example A and the former has, like regular coffee, an excellent taste and flavor inherent in coffee (Table A1).

**(Table A1)**

| | Example A1 | Comparative Example A |
|---|---|---|
| Flavor | 4.3 | 3.7 |
| Bitter taste | 3.6 | 3.1 |
| Acidic taste | 1.9 | 1.1 |
| Aftertaste | 2.2 | 1.4 |
| Coffee feel | 2.4 | 1.8 |
| Total evaluation | 3.2 | 2.9 |

| | | |
|---|---|---|
| 6 (good) ↔ (bad) 0 | | |

In the table, seven scores, "very good" = 6, "good" = 5, "slightly good" = 4, "common" = 3, "slightly bad" = 2, "bad" = 1, and "very bad" = 0, were employed in the evaluation standard.

### (Test results: Evaluation 2)

With respect to the drinks obtained in Examples A1, A2 and A3 and Comparative Example A, those just after the production and those preserved under acceleration conditions with time (at 60°C for 3 weeks) were subjected to instrumental analysis respectively to analyze an amount of chlorogenic acid, a total amount of organic acids and the change thereof. As a result, it was found that the reduction rate of chlorogenic acid with time was suppressed (Table A2), and that the amount of organic acids which causes quality deterioration was decreased and the increase in its amount with time was suppressed (Table A3). Consequently, it was possible to obtain the high-quality stable coffee drinks with less quality deterioration.

**(Table A2)**

| Amount of chlorogenic acid (%) | | | | |
|---|---|---|---|---|
| | Example A1 | Example A2 | Example A3 | Comparative Example A |
| Just after production | 100 | 100 | 100 | 100 |
| 60°C, 3 weeks | 97 | 94 | 96 | 89 |

**(Table A3)**

| Total amount of organic acids (ppm) | | | | |
|---|---|---|---|---|
| | Example A1 | Example A2 | Example A3 | Comparative Example A |
| Just after production | 574.4 | 626.2 | 544.0 | 702.9 |
| 60°C, 3 weeks | 660.7 | 635.2 | 606.9 | 861.9 |

### (B) Milk-containing drinks

A milk-containing coffee was produced according to the following recipe, and effects of preventing deterioration of stability, flavor and quality thereof by a current passage treatment and an electrolysis treatment were tested. Example B1 In the following Examples B2 to B4 and Comparative Examples B1 and B2 as well, the respective milk-containing coffee drinks were produced according to the same recipe.

### (Recipe used in producing milk-containing coffee drinks)

| | Production of 500 L |
|---|---|
| Coffee beans | 10.0 kg |
| Sodium bicarbonate | 0.25 kg |
| Sugar | 26.5 kg |
| Milk | 165.0 kg |
| Emulsifying agent (sucrose fatty acid ester) | 0.6 kg |

10 kg of coffee beans was extracted with 100 L of hot water to obtain a coffee extracted liquid (so-called regular coffee). Then, sodium bicarbonate and sugar were added to this coffee extracted liquid. This mixture was further mixed with milk (containing an emulsifying agent) subjected to a current passage treatment (at 10 A for 0.02 second), followed by adjusting the final volume of the product to 500 L. Subsequently, the resulting product was filled in cans, and pasteurized in a retort (F₀ = 40 or more) to obtain a milk-containing coffee drink.

### Example B2 (Reference Example)

10 kg of coffee beans was extracted with 100 L of hot water to obtain a coffee extracted liquid (so-called regular coffee). Then, sodium bicarbonate and sugar were added to this coffee extracted liquid. This mixture was further mixed with milk (containing an emulsifying agent) subjected to an electrolysis treatment, followed by adjusting the final volume of the product to 500 L. Subsequently, the resulting product was filled in cans, and pasteurized in a retort (F₀ = 40 or more) to obtain a milk-containing coffee drink.

Incidentally, the electrolysis treatment was conducted by using an electrolytic device of ARV Company (using an ion exchange membrane), passing the liquid milk at a flow rate of 4 liters per minute while passing a DC current of 5 A.

### Example B3 (Reference Example)

10 kg of coffee beans was extracted with 100 L of hot water to obtain a coffee extracted liquid (so-called regular coffee). Then, sodium bicarbonate and sugar were added to this coffee extracted liquid. This mixture was further mixed with milk (containing an emulsifying agent), followed by adjusting the final volume of the product to 500 L. Subsequently, the resulting product was subjected to an electrolysis treatment, filled in cans, and pasteurized in a retort (F₀ = 40 or more) to obtain a milk-containing coffee drink.

The electrolysis treatment of the mixed liquid was conducted as in Example B2 using the device of ARV Company. In these Examples, after the electrolysis treatment, the overall liquid in the electrolytic cell was collected, and subjected to the subsequent treatments. Only the liquid on the cathode side may be collected and used as required; in this case, a product better in stability, taste and mouth feel is obtained, though yield and a production efficiency are decreased.

### Example B4 (Reference Example)

10 kg of coffee beans was extracted with 100 L of hot water to obtain a coffee extracted liquid (so-called regular coffee). Then, sodium bicarbonate and sugar were added to this coffee extracted liquid. This mixture was further mixed with milk (containing an emulsifying agent) subjected to an electrolysis treatment, followed by adjusting the final volume of the product to 500 L. Subsequently, the resulting product was subjected to UHT pasteurization (F₀= 60 or more), and filled in PET bottles to obtain a milk-containing coffee drink.

Incidentally, the electrolysis treatment was conducted by using an electrolytic device having an electrolytic cell with no membrane (manufactured by ARV Company), passing the liquid (milk) at a flow rate of 4 liters per minute while passing a DC current of 10 A.

### (Comparative Example B1)

Sodium bicarbonate and sugar were added to an extracted liquid obtained by extracting 10 kg of coffee beans with 100 L of hot water, and the mixture was further mixed with milk containing an emulsifying agent, followed by adjusting the final volume of the product to 500 L. Then, the mixed liquid was filled in cans, and pasteurized in a retort (F₀ = 40 or more) to obtain a milk-containing coffee drink.

### (Comparative Example B2)

Sodium bicarbonate and sugar were added to an extracted liquid obtained by extracting 10 kg of coffee beans with 100 L of hot water, and the mixture was further mixed with milk containing an emulsifying agent, followed by adjusting the final volume of the product to 500 L. Then, the mixed liquid was subjected to UHT pasteurization (F₀ = 60 or more) and filled in PET bottles to obtain a milk-containing coffee drink.

### (Test results: Evaluation 1)

The drinks obtained in Example B1 and Comparative Example B1 were drunk by 15 coffee expert panelists including 5 coffee expert testers. Consequently, it was found that the drink in Example B1 was strong in flavor and intrinsic taste of milk and good in sweetness and coffee feel as compared with the drink obtained in Comparative Example B1, and had the well-balanced taste and flavor (Table B1).

**(Table B1**

| | Example B1 | Comparative Example B1 |
|---|---|---|
| Flavor | 4.1 | 3.3 |
| Sweetness | 3.6 | 3.3 |
| Coffee feel | 3.1 | 2.5 |
| Rich taste | 3.9 | 3.5 |
| Aftertaste | 3.5 | 3.1 |
| Total evaluation | 3.5 | 2.7 |
| 6 (good) ↔ (bad) 0 | | |

In the table, seven scores, "very good" = 6, "good" = 5, "slightly good" = 4, "common" = 3, "slightly bad" = 2, "bad" = 1, and "very bad" = 0, were employed in the evaluation standard.

### (Test results: Evaluation 2)

With respect to the drinks obtained in Examples B1, B2 and B3 and Comparative Example B1, the cans of those just after the production and the cans of those preserved under acceleration conditions with time (at 60°C for 2 weeks) were opened, and an amount of precipitate was measured by generating precipitate by centrifugation (3,000 rpm, 10 minutes). As a result, it was found that in Examples B1, B2 and B3, the precipitate less generated in the production than in Comparative Example B1 an excellent effect was brought forth in suppressing the generation of precipitate during preservation and the milk-containing coffee drinks having a stable emulsified state were provided (Table B2).

**(Table B2)**

| | Example B1 | Example B2 | Example B3 | Comparative Example B1 |
|---|---|---|---|---|
| Just after production | 0.3% | 0.3% | 0.2% | 0.8% |
| 60°C, 2 weeks | 1.8% | 1.0% | 0.7% | 4.3% |

### (Test results: Evaluation 3)

The bottles of the drinks obtained in Example B4 and Comparative Example B2 were opened, and an amount of precipitate was measured by generating precipitate by centrifugation (3,000 rpm, 10 minutes). As a result, it was found that in Example B4, an excellent effect was exhibited in suppressing the formation of precipitate as compared with Comparative Example B2 and the milk-containing coffee drink having a stable emulsified state was provided. At the same time, scorching of the plate in the UHT pasteurization was tested. The amount of scorched scales was smaller in Example B4 (Table B3).

**(Table B3)**

| | Example B4 | Comparative Example B2 |
|---|---|---|
| Amount of precipitate | 0.2% | 6.5% |

### Example B5

Milk tea was produced according to the following recipe, and the effect of preventing the deterioration of stability, taste and quality by a current passage treatment was tested. In Comparative Example B3 below, a milk-containing tea was produced according to the same recipe.

| (Recipe used for production of milk tea) | |
|---|---|
| | kg/1,000 L |
| Black tea leaves | 8.0 |
| Sodium bicarbonate | 0.2 |
| Sugar | 64.0 |
| Milk | 260.0 |
| Emulsifying agent (sucrose fatty acid ester) | 1.5 |

A pH adjustor and sugar were added to tea extracted liquid obtained by extracting 8 kg of black tea leaves with 120 L of hot water, and the mixture was further mixed with milk containing an emulsifying agent and subjected to a current passage treatment (at 10 A for 0.02 second), followed by adjusting the final volume of the product. The resulting product was filled in containers, and pasteurized in a retort (Fₒ=40 or more) to obtain milk tea (a milk-containing tea).

### (Comparative Example B3)

A pH adjustor and sugar were added to tea extracted liquid obtained by extracting 8 kg of black tea leaves with 120 L of hot water, and the mixture was further mixed with milk containing an emulsifying agent, followed by adjusting the final volume of the product. The resulting product was filled in containers, and pasteurized in a retort (F₀ = 40 or more) to obtain milk tea (a milk-containing tea).

### (Test results: Evaluation 4)

The drinks obtained in Example B5 and Comparative Example B3 were drunk by 15 tea expert panelists. Consequently, it was found that the drink in Example B5 was strong in flavor and rich in taste of milk and good in quality as compared with the drink obtained in Comparative Example B3 and had the well-balanced taste and flavor.

**(Table B4)**

| | Example B5 | Comparative Example B3 |
|---|---|---|
| Flavor | 3.9 | 3.2 |
| Milk feel | 4.1 | 3.2 |
| Sweetness | 3.5 | 2.8 |
| Tea feel | 3.9 | 3.6 |
| Rich taste | 3.9 | 3.0 |
| Aftertaste | 3.9 | 2.5 |
| Total evaluation | 4.2 | 3.2 |
| 6 (good) ↔ (bad) 0 | | |

### (Evaluation standard is as shown previously.)

### (C) Foods having an improved antioxidation ability

### Example C1 (Reference Example)

12 kg of coffee beans was extracted with 120 L of hot water to obtain a coffee extracted liquid (so-called regular coffee: coffee solids content Brix 3.0). Subsequently, the coffee extracted liquid was passed through an electrolytic device of ARV Company at a rate of 4 liters per minute, while a DC current of 5 A was passed, wherein the anode and the cathode were partitioned with an ion exchange membrane, and the coffee liquid was passed through both the electrode sides. Then, the liquid of the cathode side was collected, and 43 g of sodium bicarbonate was added thereto, followed by adjusting the final volume of the product to 143 L. The resulting liquid was filled in cans, sealed, and then pasteurized in a retort (F₀ = 4 or more) to obtain a coffee drink.

For comparison with Example C1 the following Comparative Example C1 was performed at the same time.

### (Comparative Example C1)

43 g of sodium bicarbonate was added to a coffee extracted liquid (so-called regular coffee: coffee solid content Brix 3.0) obtained by extracting 10 kg of coffee beans with 100 L of hot water, followed by adjusting the final volume of the product to 143 L. Then, the resulting liquid was filled in cans, sealed, and pasteurized in a retort (F₀ = 4 or more) to obtain a coffee drink.

### (Test results: Evaluation 1)

with respect to the drinks obtained in Example C1 and Comparative Example C1, an antioxidation ability (radical-scavenging activity) was measured by a method using DPPH to test an antioxidation ability.

Measuring method: 15 µl of a sample was taken, and adjusted to 800 µl by addition of distilled water. Further, 3.2 ml of 0. 1M Tris buffer (pH 7.4) was added thereto, and 4 ml of 500 µM DPPH (1,1-diphenyl-2-picrylhydrazyl) was, further, added thereto. The mixture was allowed to stand in a dark place for 20 minutes, and subjected to HPLC.

With respect to the HPLC conditions, the antioxidation ability was measured from the area of an absorption peak of DPPH with an absorbance detector (at 517 nm), a mobile phase of water:methanol = 3:7, an Octyl column and a flow rate of 1 ml/min.

The results of measuring the antioxidation ability are shown on condition that the result of Comparative Example is rated as 100% (Table Cl).

**(Table Cl)**

| | Example C1 | Comparative Example C1 |
|---|---|---|
| Antioxidation ability of coffee drink | 137% | 100% |

From Table 1C, it was found that the radical-scavenging activity, namely, the antioxidation ability to DPPH was higher in Example C1 than in Comparative Example C1. The results revealed that the antioxidation ability of the drink was increased by the electrolysis treatment and therefore the drink treated is healthier for consumers.

### (Test results: Evaluation 2)

The drinks obtained in Example C1 and Comparative Example C1 were compared with respect to the content of chlorogenic acid which is a main antioxidation component of coffee and the content of quinic acid which is one of its decomposition products. The measurement was conducted by HPLC. With respect to the HPLC conditions, the content of chlorogenic acid was measured from the area of an absorption peak with a UV detector (at 270 nm), a mobile phase of 4% acetic acid:methanol = 85:15, an ODS column and a flow rate of 1 ml/min. The content of quinic acid was measured from the height of a detection peak with a conductivity detector, a mobile phase of 5 mM perchloric acid, a strongly acidic cation exchange resin (styrenedivinylbenzene copolymer) column and a flow rate of 0.8 ml/min (Table C2).

**(Table C2)**

| | Chlorogenic acid (ppm) | | Quinic acid (ppm) | |
|---|---|---|---|---|
| | Example C1 | Comparative Example C1 | Example C1 | Comparative Example C1 |
| Content in coffee drink | 655.2 | 673.4 | 946.0 | 944.0 |

As is apparent from Table C2, it was shown that in Example C1, the content of the main antioxidation component of coffee was slightly lower than that in Comparative Example C1.

From the results of Evaluation 1 and Evaluation 2, it is said that although the amount of the main antioxidation component was not increased, the antioxidation ability can be increased by conducting the electrolysis treatment.

### Example C2 (Reference Example)

14 kg of red grapefruit (grown in Florida) was squeezed with an in-line squeezing machine (manufactured by FMC Company), and subjected to enzyme deactivation by heating at 93°C for 5 seconds and treatment with a pulper finisher. 8 L of the resulting squeezed liquid was subjected to an electrolysis treatment with an electrolytic device having an ion exchange membrane at 7 A. The liquid on the cathode side was collected, and then subjected to a flash pasteurization at 93°C for 5 seconds. The resulting liquid was hot-packed in cans to obtain a grapefruit juice.

Incidentally, in the electrolysis, the anode and the cathode were partitioned with an ion exchange membrane, and the squeezed liquid was passed through both the electrode sides.

For comparison with Example C2, the following Comparative Example C2 was performed at the same time.

### (Comparative Example C2)

14 kg of red grapefruit (grown in Florida) was squeezed with an in-line squeezing machine (manufactured by FMC Company), and subjected to enzyme deactivation by heating at 93°C for 5 seconds and treatment with a pulper finisher. 8 L of the resulting squeezed liquid was subjected to a flash pasteurization at 93°C for 5 seconds, hot-packed in cans to obtain a grapefruit juice.

### Example C3 (Reference Example)

14 kg of red grapefruit (grown in Florida) was squeezed with an in-line squeezing machine (manufactured by FMC Company), and subjected to enzyme deactivation by heating at 93°C for 5 seconds and treatment with a pulper finisher. 8 L of the resulting squeezed liquid (Brix 11) was subjected to an electrolysis treatment with an electrolytic device having an ion exchange membrane at 7 A. The liquid of the cathode side was collected, and then concentrated to Brix 33 by a vacuum concentration. The resulting concentrated fruit juice was reduced again to Brix 11 as in squeezing by addition of water, then subjected to flash pasteurization at 93°C for 5 seconds, hot-packed in cans to obtain a grapefruit juice.

Incidentally, in the electrolysis, the anode and the cathode were partitioned with the ion exchange membrane, and the squeezed liquid was passed through both the electrode sides.

For comparison with Example C3, the following Comparative Example C3 was performed at the same time.

### (Comparative Example C3)

14 kg of red grapefruit (grown in Florida) was squeezed with an in-line squeezing machine (manufactured by FMC Company), and subjected to enzyme deactivation by heating at 93°C for 5 seconds and treatment with a pulper finisher. 8 L of the resulting squeezed liquid (Brix 11) was concentrated to Brix 33 by a vacuum concentration. The resulting concentrated fruit juice was reduced again to Brix 11 as in squeezing by addition of water, then subjected to a flash pasteurization at 93°C for 5 seconds, and hot-packed in cans.

### (Test results: Evaluation 3)

With respect to the juices obtained in Example C2, Comparative Example C2, Example C3 and Comparative Example C3, the antioxidation ability was measured using DPPH to test an antioxidation ability.

Measuring method: 100 µl of a sample was taken, and adjusted to 400 µl by addition of distilled water. Further, 1.6 ml of 0.1 M Tris buffer (pH 7.4) was added thereto, and 2 ml of 500 µM DPPH (1,1-diphenyl-2-picrylhydrazyl) was then added. The mixture was allowed to stand in a dark place for 20 minutes, and subjected to HPLC.

With respect to the HPLC conditions, the antioxidation ability was measured from the area of an absorption peak of DPPH with an absorbance detector (at 517 nm), a mobile phase of water:methanol = 3:7, an octyl column and a flow rate of 1 ml/min.

The results of measuring the antioxidation ability are shown on the condition that the result of Comparative Example is rated as 100% (Table C3).

**(Table C3)**

| | Comparative Example C2 | Example C2 | Comparative Example C3 | Example C3 |
|---|---|---|---|---|
| Antioxidation ability of grapefruit juice | 100% | 111% | 100% | 153% |

The radical-scavenging activity, namely, the antioxidation ability to DPPH was higher in Examples C2 and C3 than in Comparative Examples C2 and C3. The results revealed that the antioxidation ability of the liquid was increased by the electrolysis treatment and therefore the drink treated is healthier for consumers.

### (Test results: Evaluation 4)

The drinks obtained in Example C2, Comparative Example C2, Example C3 and Comparative Example C3 were compared with respect to the content of vitamin C of reduced type which is a main antioxidation component of grapefruit.

The measurement was conducted by HPLC. With respect to the HPLC conditions, the content of vitamin C of reduced type was measured from the area of a detection peak with a UV detector (at 250 nm), a mobile phase of acetonitrile:50 mM ammonium dihydrogenphosphate = 75:25, a Polyamine II column and a flow rate of 1 ml/min.

The results of measuring vitamin C of reduced type are shown on the condition that the result of Comparative Example is rated as 100% (Table C4).

**(Table C4)**

| | Comparative Example C2 | Example C2 | Comparative Example C3 | Example C3 |
|---|---|---|---|---|
| Content in grapefruit juice | 100% | 88% | 100% | 92% |

As is apparent from Table C4, it was identified that in Examples C2 and C3, the content of vitamin C of reduced type was slightly lower than that in Comparative Examples C2 and C3.

From Evaluation 3 and Evaluation 4, it was found that although the content of the main antioxidation component was low, the antioxidation ability was effectively increased by conducting the electrolysis treatment.

### Example C4

0.1 kg of vitamin C, 4.0 kg of citric acid (anhydride) and 3.0 kg of sugar were added to 30 L of water, and the mixture was adjusted to 100 L with water to obtain a mixed liquid. This mixed liquid was subjected to a current passage treatment under the condition of 10 A, then subjected to a flash pasteurization at 95°C, and hot-packed in cans.

### Example C5 (Reference Example)

0.1 kg of vitamin C, 4.0 kg of citric acid (anhydride) and 3.0 kg of sugar were added to 30 L of water, and the mixture was adjusted to 100 L with water to obtain a mixed liquid. This mixed liquid was subjected to an electrolytic device with an ion exchange membrane under the condition of 10 A, and the liquid obtained from the cathode side was collected. Then, a flash pasteurization was conducted at 95°C, and the resulting liquid was hot-packed in cans. Incidentally, in the electrolysis treatment, the cathode and the anode were partitioned, and the mixed liquid was passed through both the electrode sides.

For comparison with Examples C4 and C5, the following Comparative Example C4 was performed at the same time.

### (Comparative Example C4)

0.1 kg of vitamin C, 4.0 kg of citric acid (anhydride) and 3.0 kg of sugar were added to 30 L of water, and the mixture was adjusted to 100 L with water to obtain a mixed liquid. This mixed liquid was subjected to a flash pasteurization at 95°C, and hot-packed in cans.

### (Evaluation test: Evaluation 5)

With respect to the drinks obtained in Example C4, Example C5 and Comparative Example C4, the antioxidation ability was measured using DPPH to test an antioxidation ability.

Measuring method: 100 µl of a sample was taken, and adjusted to 400 µl by addition of distilled water. Further, 1.5 ml of 0.1 M Tris buffer (pH 7.4) was added thereto, and 2 ml of 500 µM DPPH (1,1-diphenyl-2-picrylhydrazyl) was then added. The mixture was allowed to stand in a dark place for 20 minutes, and subjected to HPLC.

With respect to the HPLC conditions, the antioxidation ability was measured from the area of an absorption peak of DPPH with an absorbance detector (at 517 nm), a mobile phase of water:methanol = 3:7, an Octyl column and a flow rate of 1 ml/min.

The results of measuring the antioxidation ability are shown on condition that the result of Comparative Example is rated as 100% (Table C5).

**(Table C5)**

| | Example C4 | Example C5 | Comparative Example C4 |
|---|---|---|---|
| Antioxidation ability of drink | 102% | 110% | 100% |

The radical-scavenging activity, namely, the antioxidation ability to DPPH was higher in Examples C4 and C5 than in Comparative Example C4. The results revealed that the antioxidation ability of the liquid was increased by the electrolysis treatment or the current passage treatment and the liquid treated is healthier for consumers.

### Effects of the Invention

The deterioration of quality can be prevented by conducting the current passage treatment.

In coffee drinks, it is possible to control the rate of reduction with time of chlorogenic acid which is a component in coffee or to control the amounts of formed lactic acid, formic acid and acetic acid which decrease quality.

Consequently, it is possible to prevent the quality deterioration of drinks in vending machines installed not only indoors but also outdoors, can warmers and the like, to extend the time in hot vending and to extend the period within which drinks can safely be drunk whereby the shelf life is prolonged. Further, when the production steps of the process are performed in the deoxidated condition, it is possible to further control quality deterioration or improve stability.

In the milk-containing drinks, the current passage treatment helps to increase the quality and improve the stability of milk. Because of the stabilization, the use of a pH adjustor, an emulsifying agent, a stabilizer and the like which have been so far used can be reduced; resultantly it is possible to depress the use of many additives.

As a result, it is possible to prevent the quality deterioration of drinks (prevention of precipitation of milk) in vending machines, can warmers and the like, to extend the time in hot vending machines and to extend the period within which drinks can safely be drunk. Further, it is possible to prevent the formation of scales on a plate in pasteurization with a plate heater, such as UHT pasteurization, which leads to the improvement in a production efficiency.

Moreover, it has been found for the first time by the present inventors that when a component(s) having an antioxidation ability, namely, a radical-scavenging activity is(are) subjected to the current passage treatment, the antioxidation ability (radical-scavenging activity) is improved.

When a liquid food containing a component(s) having an antioxidation ability is subjected to the current passage treatment according to the invention, the antioxidation ability is thereby improved. When consumers eat or drink the liquid food treated, the antioxidation component(s) thereof acts(act) in vivo more effectively than the component(s) not subjected to the current passage treatment, and is(are) expected to contribute to health. Since the current passage treatment is effective for making an antioxidation ability higher than that provided by the amount of the antioxidation component(s) originally present in the liquid, amounts of a material (s) used for increasing an antioxidation ability, especially a food additive(s), can be reduced.

Still further, since an antioxidation ability can be impacted to materials or foods with a less antioxidation ability, even foods that do not function so much as health foods can exhibit functionality for health.

Moreover, since the foregoing prominent effects provided by the invention are brought forth without using a food additive(s), the invention can meet the consumers needs for either dispensing with, or controlling, various additives such as chemical substances. In this respect as well, the invention is outstanding.

In this manner, the quality of liquid foods such as coffee drinks, milk-containing drinks and foods good for health is improved.

The term "pasteurize" or the term "pasteurization" used in the present specification means "pasteurize" or "pasteurization" of a broad sense, which is carried out at any temperature of from low temperature to ultrahigh temperature.

## Claims

1. A method of treatment of a liquid food using an electric current, wherein the electric current treatment is carried out under the following conditions;
(1) the liquid food to be treated is introduced into a device equipped with a cathodic electrode which is one selected from the group consisting of a stainless steel electrode, a platinum-plated titanium electrode and a titanium platinum calcination electrode, and an anodic electrode which is one selected from the group consisting of a ferrite electrode, a platinum-plated titanium electrode and a titanium platinum calcination electrode, and not equipped with a diaphragm;
(2) a direct current of 0.5 to 20A is applied to the food for 0.001 second to 5 minutes, and
(3) the treated liquid food is recovered,
wherein the liquid food to be treated is one selected from the group consisting of (a) coffee extract; (b) milk composition; (c) black tea extract; (d) Chinese tea extract; (e) green tea extract; and (f) one selected from the group consisting of said (a) to (e) which contains further at least one added material selected from the group consisting of pH adjustor; vitamin C; vitamin E; emulsifying agent; antioxidant; saccharide; sugar alcohol; sweetener; flavour; enzyme; and stabilizer.

2. The method according to claim 1 wherein the liquid food to be treated in step (1) is introduced by flowing continuously through the device.

3. A method for treatment of a liquid to be used as a material for preparing a liquid food, wherein an electric current treatment is applied to the liquid under the following conditions;
(1) the liquid to be treated is introduced into a device equipped with a cathodic electrode which is one selected from the group consisting of a stainless steel electrode, a platinum-plated titanium electrode and a titanium platinum calcination electrode, and an anodic electrode which is one selected from the group consisting of a ferrite electrode, a platinum-plated titatnium electrode and a titanium platinum calcination electrode, and not equipped with a diaphragm;
(2) a direct current of 0.5 to 20A is applied to the food for 0.001 second to 5 minutes, and
(3) the treated liquid is recovered,
wherein the liquid to be treated is one selected from the group consisting of (a) coffee extract; (b) milk composition; (c) black tea extract; (d) Chinese tea extract; (e) green tea extract; and (f) one selected from the group consisting of said (a) to (e) which contains further at least one added material selected from the group consisting of pH adjustor; vitamin C; vitamin E; emulsifying agent; antioxidant; saccharide; sugar alcohol; sweetener; flavour; enzyme; and stabilizer.

4. The method according to claim 3 wherein the liquid to be treated in step (1) is introduced by flowing continuously the liquid through the device.

## Patentansprüche

1. Ein Verfahren zur Behandlung eines flüssigen Nahrungsmittels unter Verwendung eines elektrischen Stroms, wobei die Behandlung mit elektrischem Strom unter den folgenden Bedingungen ausgeführt wird:
(1) das zu behandelnde flüssige Nahrungsmittel wird in eine Vorrichtung eingeführt, welche mit einer kathodischen Elektrode, die eine ist, die aus der Gruppe, bestehend aus einer Edelstahlelektrode, einer platinierten Titanelektrode und einer Titan-Platin-Kalzinierungselektrode, ausgewählt ist, und einer anodischen Elektrode, die eine ist, die aus der Gruppe, bestehend aus einer Ferritelektrode, einer platinierten Titanelektrode und einer Titan-Platin-Kalzinierungselektrode, ausgewählt ist, ausgestattet ist und nicht mit einer Membran ausgestattet ist;
(2) ein Gleichstrom von 0,5 bis 20 A wird 0,001 Sekunden bis 5 Minuten lang auf das Nahrungsmittel angewendet, und
(3) das behandelte flüssige Nahrungsmittel wird wiedergewonnen,
wobei das zu behandelnde flüssige Nahrungsmittel eines ist, das ausgewählt ist aus der Gruppe, bestehend aus (a) einem Kaffeeextrakt, (b) einer Milchzusammensetzung, (c) einem Extrakt von schwarzem Tee, (d) einem Extrakt von chinesischem Tee, (e) einem Extrakt von grünem Tee und (f) einem Ausgewählten aus der Gruppe, bestehend aus (a) bis (e), das ferner mindestens ein zusätzliches Material enthält, das aus der Gruppe, bestehend aus einem pH-Einsteller, Vitamin C, Vitamin E, einem Emulgator, einem Antioxidationsmittel, einem Saccharid, einem Zuckeralkohol, einem Süßstoff, einem Aroma, einem Enzym und einem Stabilisator, ausgewählt ist.

2. Verfahren gemäß Anspruch 1, wobei das zu behandelnde flüssige Nahrungsmittel in Schritt (1) eingeführt wird, indem es kontinuierlich durch die Vorrichtung fließen gelassen wird.

3. Ein Verfahren zur Behandlung einer Flüssigkeit, die als ein Material zur Zubereitung eines flüssigen Nahrungsmittels verwendet werden soll, wobei auf die Flüssigkeit eine Behandlung mit elektrischem Strom unter den folgenden Bedingungen angewendet wird:
(1) die zu behandelnde Flüssigkeit wird in eine Vorrichtung eingeführt, die mit einer kathodischen Elektrode, welche eine ist, die aus der Gruppe, bestehend aus einer Edelstahlelektrode, einer platinierten Titanelektrode und einer Titan-Platin-Kalzinierungselektrode, ausgewählt ist, und einer anodischen Elektrode, die eine ist, die aus der Gruppe, bestehend aus einer Ferritelektrode, einer platinierten Titanelektrode und einer Titan-Platin-Kalzinierungselektrode, ausgewählt ist, ausgestattet ist und nicht mit einer Membran ausgestattet ist;
(2) ein Gleichstrom von 0,5 bis 20 A wird 0,001 Sekunden bis 5 Minuten lang auf das Nahrungsmittel angewendet, und
(3) die behandelte Flüssigkeit wird wiedergewonnen,
wobei die zu behandelnde Flüssigkeit eine ist, die ausgewählt ist aus der Gruppe, bestehend aus (a) einem Kaffeeextrakt, (b) einer Milchzusammensetzung, (c) einem Extrakt von schwarzem Tee, (d) einem Extrakt von chinesischem Tee, (e) einem Extrakt von grünem Tee und (f) einem Ausgewählten aus der Gruppe, bestehend aus (a) bis (e), das ferner mindestens ein zusätzliches Material enthält, das aus der Gruppe, bestehend aus einem pH-Einsteller, Vitamin C, Vitamin E, einem Emulgator, einem Antioxidationsmittel, einem Saccharid, einem Zuckeralkohol, einem Süßstoff, einem Aroma, einem Enzym und einem Stabilisator, ausgewählt ist.

4. Verfahren gemäß Anspruch 3, wobei die zu behandelnde Flüssigkeit in Schritt (1) eingeführt wird, indem die Flüssigkeit kontinuierlich durch die Vorrichtung fließen gelassen wird.

## Revendications

1. Un procédé pour traiter un aliment liquide à l'aide d'un courant électrique, dans lequel le traitement par courant électrique est effectué dans les conditions suivantes :
(1) l'aliment liquide à traiter est introduit dans un dispositif équipé d'une électrode cathodique, laquelle est une électrode sélectionnée dans le groupe consistant en une électrode en acier inoxydable, une électrode en titane platiné et une électrode de calcination en titane platine, et d'une électrode anodique, laquelle est une électrode sélectionnée dans le groupe consistant en une électrode en ferrite, une électrode en titane platiné et une électrode de calcination en titane platine, et non équipé d'un diaphragme ;
(2) un courant continu allant de 0,5 à 20 A est appliqué sur l'aliment pendant de 0,001 seconde à 5 minutes, et
(3) l'aliment liquide traité est récupéré,
dans lequel l'aliment liquide à traiter est un aliment sélectionné dans le groupe consistant en : (a) extrait de café ; (b) composition lactée ; (c) extrait de thé noir ; (d) extrait de thé chinois ; (e) extrait de thé vert ; et (f) un élément sélectionné dans le groupe consistant en lesdits (a) à (e) qui contient en outre au moins une matière ajoutée sélectionnée dans le groupe consistant en : régulateur de pH ; vitamine C ; vitamine E ; agent émulsionnant ; antioxydant ; saccharide ; alcool de sucre ; édulcorant ; arôme ; enzyme ; et stabilisateur.

2. Le procédé selon la revendication 1 dans lequel l'aliment liquide à traiter à l'étape (1) est introduit par écoulement continu à travers le dispositif.

3. Un procédé pour le traitement d'un liquide devant être utilisé comme matière pour la préparation d'un aliment liquide, dans lequel un traitement par courant électrique est appliqué sur le liquide dans les conditions suivantes :
(1) le liquide à traiter est introduit dans un dispositif équipé d'une électrode cathodique, laquelle est une électrode sélectionnée dans le groupe consistant en une électrode en acier inoxydable, une électrode en titane platiné et une électrode de calcination en titane platine, et d'une électrode anodique, laquelle est une électrode sélectionnée dans le groupe consistant en une électrode en ferrite, une électrode en titane platiné et une électrode de calcination en titane platine, et non équipé d'un diaphragme ;
(2) un courant continu allant de 0,5 à 20 A est appliqué sur l'aliment pendant de 0,001 seconde à 5 minutes, et
(3) le liquide traité est récupéré,
dans lequel le liquide à traiter est un liquide sélectionné dans le groupe consistant en : (a) extrait de café ; (b) composition lactée ; (c) extrait de thé noir ; (d) extrait de thé chinois ; (e) extrait de thé vert ; et (f) un élément sélectionné dans le groupe consistant en lesdits (a) à (e) qui contient en outre au moins une matière ajoutée sélectionnée dans le groupe consistant en : régulateur de pH ; vitamine C ; vitamine E ; agent émulsionnant ; antioxydant ; saccharide ; alcool de sucre ; édulcorant ; arôme ; enzyme ; et stabilisateur.

4. Le procédé selon la revendication 3 dans lequel le liquide à traiter à l'étape (1) est introduit par écoulement continu du liquide à travers le dispositif.
